# EUROPÄISCHE PATENTANMELDUNG

(11) **EP 4 092 779 A1**
(43) Veröffentlichungstag der Anmeldung: **23.11.2022**
(21) Anmeldenummer: 22170301.0
(22) Anmeldetag: 27.04.2022
(51) Int. Cl.: H01M 4/04, H01M 4/131, H01M 4/36, H01M 4/525, H01M 10/052, C01G 53/00

(54) **SEKUNDÄRPARTIKEL FÜR EINE KATHODE EINER SEKUNDÄREN LITHIUM-BATTERIEZELLE SOWIE VERFAHREN ZUR HERSTELLUNG EINES SOLCHEN**

(30) Priorität: 10.05.2021 DE 102021204702
(71) Anmelder: VOLKSWAGEN AG, 38440 Wolfsburg (DE)
(72) Erfinder: GLAVAS, Vedran, 38440 Wolfsburg (DE); KOOPMANN, Julian, 38106 Braunschweig (DE); MUELLER, Jonathan, 38518 Gifhorn (DE); OLOUOU GUIFO, Stéphane Brice, 38442 Wolfsburg (DE); WEGENER, Julian, 38442 Wolfsburg (DE); WIETHOP, Marco, 38302 Wolfenbüttel (DE)
(74) Vertreter: FDST Patentanwälte

(57) **Zusammenfassung**

Die Erfindung betrifft einen Sekundärpartikel (6) für eine Kathode einer sekundären Lithium-Batteriezelle. Dieser weist eine Vielzahl an Primärpartikeln (8) mit jeweils einer schichtartigen kristallinen Struktur auf, bei der Übergangsmetalloxid-Schichten (2) und Lithium-Schichten (4) alternieren. Jeder der Primärpartikel (8) weist dabei eine räumliche Ausdehnung in Richtung dessen kristallographischer c-Achse (c) auf, die größer ist als in einer Richtung senkrecht zu dieser Achse. Die Erfindung betrifft des Weiteren ein Verfahren zur Herstellung eines solchen.

## Beschreibung

Die Erfindung betrifft einen Sekundärpartikel für eine Kathode einer Lithium -Batteriezelle. Dabei umfasst der Sekundärpartikel eine Vielzahl an Primärpartikeln, die jeweils einen schichtartigen kristallinen Struktur aufweisen, bei der Übergangsmetalloxid-Schichten und Lithium-Schichten alternieren. Die Erfindung betrifft des Weiteren ein Verfahren zur Herstellung eines solchen.

Eine Lithium -Batteriezelle (Li-Batteriezelle), welche im Folgenden kurz auch als Batteriezelle bezeichnet wird, weist zumindest eine Anode und eine Kathode auf.

Typischerweise umfasst die Anode und die Kathode jeweils ein auch als Stromkollektor bezeichnetes Substrat, insbesondere eine Metallfolie, wobei das Substrat mit einer Beschichtung versehen ist. Diese Beschichtung weist ein Aktivmaterial, sowie zweckmäßigerweise einen Binder und ein Leitmittel, wie beispielsweise Graphit oder Leitruß, auf. Als Aktivmaterial für die Anode wird insbesondere Graphit, Graphen, sogenannte Hard-Carbon-Nanotubes oder Soft-Carbon-Nanotubes verwendet.

Insbesondere weist das (Kathoden-)Aktivmaterial für die Kathode eine Vielzahl an Sekundärpartikeln auf, welche wiederum aus einer Vielzahl an agglomerierten Primärpartikeln gebildet sind. Solche Primärpartikel können eine schichtartige kristalline Struktur aufweisen, bei der welcher Übergangsmetalloxid-Schichten und Schichten aus Lithium-Ionen (Lithium-Schichten) alternieren.

Aus der US 2020/0058937 A1 ist ein Präkursor für ein Nickel-basiertes Aktivmaterial für eine Lithium-Batterie bekannt. Dieser umfasst einen Sekundärpartikel mit einer Vielzahl an Partikelstrukturen, welche jeweils einen porösen Kernabschnitt und einen Schalenabschnitt aufweisen. Eine Mehrzahl derjenigen Primärpartikel des Schalenabschnitts, die die Oberfläche des Sekundärpartikels bilden, ist dabei derart angeordnet, dass deren Haupterstreckungsrichtung senkrecht zur Oberfläche des Sekundärpartikels angeordnet ist. Dabei ist die (110)-Kristallebene der Primärpartikel senkrecht zur Haupterstreckungsrichtung orientiert.

Aus der EP 3 723 175 A1 ist ein Aktivmaterial mit einem Sekundärpartikel bekannt, welcher agglomerierte Primärpartikel umfasst. Die Primärpartikel dabei in einer Richtung von einem inneren Abschnitt des Sekundärpartikels zu einem Oberflächenabschnitt des Sekundärpartikels elongiert. Dabei stimmt die kristallographische a-Achse im Wesentlichen mit dieser Richtung überein.

Der Erfindung liegt die Aufgabe zugrunde, einen besonders geeigneten Sekundärpartikel und ein Verfahren zu dessen Herstellung anzugeben. Insbesondere soll ein möglichst größer Diffusionskoeffizient für die Diffusion der Li-Ionen im Sekundarpartikel realisiert sein. Weiterhin soll eine Kathode für einen Lithium-Batteriezelle, welche Kathode solchen Sekundärpartikel aufweist, und eine sekundäre Lithium-Batteriezelle mit einer solchen Kathode angegeben werden.

Bezüglich des Sekundärpartikels wird die Aufgabe erfindungsgemäß gelöst durch die Merkmale des Anspruchs 1. Hinsichtlich der Kathode und hinsichtlich der Lithium-Batteriezelle wird die Aufgabe mit den Merkmalen des Anspruchs 6 bzw. des Anspruchs 7 gelöst. Bezüglich des Verfahrens wird die Aufgabe mit den Merkmalen des Anspruchs 8 erfindungsgemäß gelöst. Vorteilhafte Ausgestaltungen und Weiterbildungen sind Gegenstand der Unteransprüche. Dabei gelten die Ausführungen im Zusammenhang mit dem Sekundärpartikel sinngemäß auch für das Verfahren sowie für die Kathode und die Lithium-Batteriezelle und umgekehrt.

Der Sekundärpartikel ist für eine Kathode einer sekundären Lithium-Batteriezelle, insbesondere einer Lithium-Ionen-Batteriezelle, vorgesehen. Insbesondere ist anhand des Sekundärpartikels ein Aktivmaterial der Kathode gebildet. Der Sekundärpartikel ist insbesondere dazu geeignet, als Kathodenaktivmaterial verwendet zu werden.

Der Sekundärpartikel weist wiederum eine Vielzahl an Primärpartikeln auf. Insbesondere sind die Primärpartikel zum Sekundärpartikel agglomeriert. Geeigneter Weise sind die Primärpartikel jeweils monokristallin ausgebildet.

Jeder der Primärpartikel weist eine schichtartige kristalline Struktur auf, bei der Übergangsmetalloxid-Schichten und Lithium-Schichten, also Schichten aus Lithium-Ionen, alternieren. Mit anderen Worten sind Schichten aus Lithium-Ionen und Schichten aus einem Übergangsmetalloxid abwechselnd übereinander angeordnet. Mit noch anderen Worten sind jeweils zwischen zwei Übergangsmetalloxid-Schichten eine Schicht aus Lithium-Ionen angeordnet.

Die Primärpartikel sind geeigneter Weise aus einem Lithium-Übergangsmetall-Oxid, beispielsweise Lithium-Nickel-Mangan-Cobalt-Oxid (Li-NMC), Lithium-Nickel-Cobalt-Aluminium-Oxid (NCA), Lithium-Nickeloxid, Lithium-Cobaltoxid (LCO), gebildet oder enthalten dies zumindest.

Die Übergangsmetalloxid-Schichten spannen dabei die basalen a-b-Ebenen des Kristallgitters auf. Folglich sind die Übergangsmetalloxid-Schichten jeweils in einer mittels der kristallographischen a-Achse und der kristallographischen b-Achse der Einheitszelle aufgespannten Ebene angeordnet.

Insbesondere sind die Übergangsmetalloxid-Schichten und die Lithium-Schichten zudem senkrecht zur kristallographischen c-Achse orientiert. Also sind die Übergangsmetalloxid-Schichten und die Lithium-Schichten in Richtung der c-Achse übereinander angeordnet.

Jeder der Primärpartikel weist eine räumliche Ausdehnung in Richtung dessen kristallographischer c-Achse auf, die größer ist als dessen räumliche Ausdehnung in einer Richtung senkrecht zur c-Achse. Somit ist die räumliche Ausdehnung des jeweiligen Primärpartikels entlang der kristallographischen c-Achse größer als dessen räumliche Ausdehnung in einer durch die kristallographische a-Achse und die kristallographische b- Achse aufgespannten Ebene.

Die Primärpartikel sind somit jeweils elongiert, also länglich, ausgebildet. Diejenige Richtung, in welcher der jeweilige Primärpartikel elongiert ist, wird als Haupterstreckungsrichtung bezeichnet.

Folglich ist der Anteil der Haupterstreckungsrichtung entlang der kristallographischen c-Achse stets größer als der Anteil der Haupterstreckungsrichtung entlang einer parallel zur a-b-Kristallebene orientierten Richtung.

Jeder der Primärpartikel hat infolge dessen Schichtaufbau anisotrope Eigenschaften hinsichtlich dessen Diffusionseigenschaften. So erfolgt insbesondere eine Kristallvolumendiffusion der Lithium-Ionen (Li-Ionen) in der a-b-Kristallebene wesentlich schneller als in Richtung der kristallographischen c-Achse.

Im Vergleich zu den eingangs genannten Primärpartikeln, welche in deren a-b-Kristallebene elongiert sind, ist ein Diffusionsweg der Lithium-Ionen innerhalb der Primärpartikel, insbesondere in den a-b-Kristallebenen, aufgrund der länglichen Ausbildung in Richtung der kristallographischen c-Achse vergleichsweise klein. Weiterhin ist der Anteil an (100) und (010) Kristalloberflächen, also Oberflächen des Kristalls, die senkrecht zur a-b-Kristallebene orientiert sind, vergleichsweise groß. Deshalb ist eine Fläche, durch die Lithium-Ionen in den Primärpartikel interkalieren oder aus diesem deinterkalieren können, erhöht. Eine Korngrenzendiffusion der Lithium-Ionen erfolgt im Vergleich zur Kristallvolumendiffusion schneller. Insbesondere wird dabei die vergleichsweise langsame Kristallvolumendiffusion durch die vergleichswiese kurzen Diffusionswege in der jeweiligen a-b-Kristallebene überkompensiert. Insgesamt ist somit besonders vorteilhaft ein schnellerer Lithium-Ionen-Transport im Sekundärpartikel ermöglicht. Der Diffusionskoeffizient für die Diffusion der Lithium -Ionen im Sekundärpartikel ist also vorteilhaft vergleichsweise groß.

Dementsprechend hat eine Kathode oder eine Batteriezelle, deren Kathode solche Sekundärpartikel als Aktivmaterial aufweist, vorteilhaft eine vergleichsweise große Leistungs- und Energiedichte.

Beispielsweise weist der Sekundärpartikel zusätzlich zu den oben dargestellten Sekundärpartikeln weitere, herkömmliche, also aus dem Stand der bekannte Primärpartikel auf, welche beispielsweise kugelförmig, oder in einer Richtung parallel zur a-b-Kristallebene elongiert sind. Diese weiteren, herkömmlichen Primärpartikel werden im Folgenden zum Zwecke einer besseren Unterscheidbarkeit zu den oben beschriebenen Primärpartikeln, deren Ausdehnung in Richtung dessen kristallographischer c-Achse größer als in einer Richtung senkrecht zu dieser Achse ist, als "Zusatz-Primärpartikel" bezeichnet.

Mit anderen Worten muss der der Sekundärpartikel nicht ausschließlich die erfindungsgemäßen Primärpartikel enthalten, es können auch herkömmliche Primärpartikel, also Zusatz-Primärpartikel zugemischt und/oder im Sekundärpartikel enthalten sein. Vorzugsweise beträgt der Anteil an den erfindungsgemäßen Primärpartikeln, also an Partikeln, deren Ausdehnung in deren kristallographischer c-Achse größer ist als in einer Richtung senkrecht hierzu, mindestens 50% aller Primärpartikel.

Gemäß einer geeigneten Ausgestaltung ist die räumliche Ausdehnung der Primärpartikel in Richtung dessen kristallographischer c-Achse jeweils mindestens das 1,2-Fache, insbesondere mindestens das 1,2-Fache, geeigneter Weise mindestens das Doppelte, der Ausdehnung des Primärpartikels in einer Richtung senkrecht zu dieser Achse. Auf diese Weise ist der Anteil an (100) und (010) Kristalloberflächen, durch die Lithium-Ionen in den Primärpartikel interkalieren oder aus diesem deinterkalieren können, vorteilhaft vergleichsweise groß.

Beispielsweise ist die kristallographische c-Achse geneigt gegen die Haupterstreckungsrichtung des jeweiligen Primärpartikels, mit der Maßgabe, dass die Ausdehnung in Richtung dessen kristallographischer c-Achse größer ist als in einer Richtung senkrecht zu dieser. In bevorzugter Ausgestaltung jedoch ist die kristallographische c-Achse parallel zur Haupterstreckungsrichtung des jeweiligen Primärpartikels. Auf diese Weise ist ebenfalls der Anteil an (100) und (010) Kristalloberflächen, durch die Lithium-Ionen in den Primärpartikel interkalieren oder aus diesem deinterkalieren können, vorteilhaft weiter erhöht.

Grundsätzlich können die Primärpartikel unterschiedliche geometrische Formen aufweisen. Beispielsweise sind die Primärpartikel jeweils pyramidenförmig, zylindrisch, oder prismenförmig. Weiter beispielsweise sind die Primärpartikel jeweils ein Ellipsoid oder quaderförmig.

Geeigneter Weise umfassen die Übergangsmetalloxid-Schichten zur Erhöhung der Kapazität der Batteriezelle Nickel, insbesondere Nickel-Ionen. Beispielsweise beträgt der Nickelgehalt mindestens 50 mol-%, vorzugsweise mindestens 75 mol-%, besonders bevorzugt mindestens 90 mol-% bezüglich aller Übergangsmetall-Ionen in den Übergangsmetalloxid-Schichten.

Beispielsweise ist die Orientierung der Primärpartikel - und somit die Orientierung der c-Achse des jeweiligen Primärpartikels - im Sekundärpartikel zufällig. Gemäß einer vorteilhaften Weiterbildung jedoch ist zumindest die Mehrheit der Primärpartikel, also mehr als 50 % der Primärpartikel, insbesondere in ein einem Schalenbereich des Sekundärpartikels, also in einem Umfangsbereich des Sekundärpartikels, morphologisch radial ausgerichtet. Unter "morphologisch radial ausgerichtet" (oder im Folgenden kurz auch als radial ausgerichtet) ist dabei zu verstehen, dass die Haupterstreckungsrichtung und/oder die kristallographische c-Achse des jeweiligen Primärpartikels von einem Kern oder einem Zentrum des, insbesondere sphärisch oder ellipsoid-förmig ausgebildeten, Sekundärpartikels zu einem äußeren Rand des Sekundärpartikels hin orientiert ist. Dies hat zum Vorteil, dass die Korngrenzen der Primärpartikel radial verlaufen, so dass Lithium-Ionen vergleichsweise schnell in das Innere des Sekundärpartikel diffundieren können. Alternativ oder zusätzlich hierzu sind die Primärpartikel linear oder in Umfangsrichtung des, insbesondere sphärischen oder ellipsoid-förmigen, Sekundärpartikels nebeneinander angeordnet, wobei die kristallographische c-Achse der Primärpartikel parallel zueinander, entlang der Umfangsrichtung des Sekundärpartikels oder parallel zur Radialrichtung des Sekundärpartikel orientiert sind. Alternativ hierzu sind benachbarte Primärpartikel in dieser Radialrichtung zueinander versetzt angeordnet. Die Unterschiedlichen Anordnungen unterscheiden sich dabei insbesondere auf die Größe und die Struktur, also auf das Netz, der Korngrenzen und damit einhergehend und auf die Lithium-Ionen-Diffusion entlang der Korngrenzen aus. Vorteilhaft kann in Abhängigkeit des gewählten Materials, der Größe der Primärpartikel, deren Aspektverhältnis, oder dergleichen die Anordnung der Primärpartikel derart eingestellt werden, dass eine effektive Li-Ionen-Diffusion entlang der Korngrenzen realisiert ist.

Die Ausrichtung kann dabei insbesondere durch die Wahl von Prozessparametern, beispielsweise einer Rührgeschwindigkeit und oder einer Temperatur beim Kalzinieren, oder einer Partikelgröße der Präkursorpartikel, beeinflusst werden.

Gemäß einer geeigneten Ausgestaltung weisen die Primärpartikel eine (maximale) räumliche Ausdehnung zwischen 50 nm und 5 µm, beispielsweise zwischen 100 nm und 3 µm, insbesondere zwischen 250 nm und 1 µm, auf. Insbesondere ist die räumliche Ausdehnung des jeweiligen Primärpartikels entlang dessen Haupterstreckungsrichtung zwischen 50 nm und 5 µm.

Solche "mittelgroße" Primärpartikel weisen im Vergleich zu größeren Primärpartikeln eine größeres Korngrenzennetz auf, weshalb Lithium-Ionen vergleichsweise schnell in das Innere des Sekundärpartikel diffundieren können. Im Vergleich zu kleineren Primärpartikeln ist dabei jedoch auch noch vergleichsweise viel Material (Bulkmaterial) für die Interkalation der Lithium-Ionen vorhanden.

Ein weiterer Aspekt der Erfindung betrifft eine Kathode für eine sekundäre Lithium-Batteriezelle.. Dabei weist die Kathode einen Sekundärpartikel, geeigneter Weise eine Vielzahl an Sekundärpartikeln, auf, welcher bzw. welche nach einer der oben dargestellten Varianten ausgebildet sind. Der bzw. die Sekundärpartikel dienen dabei als Kathodenaktivmaterial. Insbesondere ist der bzw. sind die Sekundärpartikel Bestandteil einer auf ein Substrat aufgebrachten Beschichtung der Kathode.

Ein weiterer Aspekt der Erfindung betrifft eine sekundäre Lithium -Batteriezelle. Die sekundäre Lithium-Batteriezelle ist beispielsweise eine Lithium-Ionen-Batteriezelle mit einem flüssigen Elektrolyten, der zweckmäßigerweise Lithium-Ionen enthält, oder weiter beispielsweise eine sogenannte solid-state Lithium-Batteriezelle, bei welcher der Elektrolyt fest ist. Diese umfasst erfindungsgemäß eine Kathode, welche gemäß der oben dargestellten Variante ausgebildet ist. Eine solche sekundäre Lithium -Batteriezelle wird beispielsweise in einem Mobiltelefon, einem Laptop oder dergleichen verwendet. Alternativ wird eine solche Lithium -Batteriezelle für eine Batterie, insbesondere für eine Traktionsbatterie, eines elektrisch angetriebenes Kraftfahrzeugs verwendet. Hierbei sind beispielsweise mehrere solcher Batteriezellen elektrisch in Serie und/oder parallel zueinander verschaltet, wobei die Traktionsbatterie einen Strom und/oder eine Spannung für einen zum Antrieb des Kraftfahrzeugs eingerichteten Elektromotor bereitstellt.

Ein weiterer Aspekt der Erfindung betrifft ein Verfahren zur Herstellung eines Sekundärpartikels, welcher gemäß einer der oben dargestellten Varianten ausgebildet ist.

Zunächst wird in einem ersten Schritt eine wässrige Lösung eines Übergangsmetallsalzes hergestellt oder diese bereitgestellt. In einem darauf folgenden zweiten Schritt wird eine Base in die wässrige Lösung gegeben und somit eine Fällungsreaktion durchgeführt. Diese Fällungsreaktion dient dabei zur Bildung von Kristallisationskeimen aus einer entsprechenden Übergangsmetallverbindung. Diese Kristallisationskeime bilden also das Präzipitat aus der Fällungsreaktion. Unter einem Kristallisationskeim wird hierbei ein Kristall aus der Übergangsmetallverbindung verstanden, dessen Durchmesser kleiner als 200 nm, vorzugsweise zwischen 50 und 150 nm , besonders bevorzugt zwischen 75 und 125 nm beträgt. Diese Kristallisationskeime können dabei eine vergleichsweise große Ausdehnung in deren kristallographischer ab-Ebene aufweisen.

Die Fällungsreaktion wird hierzu, nach einer entsprechenden Zeitdauer unterbrochen oder beendet, beispielsweise durch Zugabe einer Säure, also durch erhöhen des pH-Wertes der wässrigen Lösung.

Gemäß einer ersten Variante des Verfahrens werden in einem dritten Schritt die aus der der Fällungsreaktion resultierenden Kristallisationskeime, insbesondere an deren (100)- und/oder an den (110)-Kristalloberflächen, mit einwertigen Kationen dotiert. Solche Dotierungsverfahren sind bereits aus dem Stand der Technik bekannt. Für die Dotierung werden vorzugsweise Wasserstoffkationen (H⁺), Natriumkationen (Na⁺), Kaliumkationen (K⁺) oder Ammoniumionen (NH₄⁺) verwendet. Aufgrund dieser Dotierung ist die Oberflächenenergie der zur kristallographischen c-Achse parallel orientierten Kristalloberflächen, insbesondere der (100)-Kristalloberflächen, der (010)-Kristalloberflächen und/oder der (110)- Kristalloberflächen reduziert.

Insbesondere wird zur Dotierung ein Überschuss dieser Kationen, zweckmäßigerweise in Form eines Salzes, zur wässrigen Lösung, die die Kristallisationskeime enthält, hinzugegeben.

Anschließend wird in einem vierten Schritt die Fällungsreaktion fortgesetzt bzw. eine weitere Fällungsreaktion eingeleitet. Hierzu wird ggf. eine Base zur Lösung hinzugegeben. Im Zuge dessen wachsen die Kristallisationskeime aus der Übergangsmetallverbindung weiter, jedoch ist ein Wachstum in Richtung der kristallographischen c-Achse aufgrund der Dotierung an den insbesondere der (100)-Kristalloberflächen, der (010)-Kristalloberflächen und/oder der (110)- Kristalloberflächen, vergleichsweise groß, so dass die bei dieser Fällungsreaktion gebildeten Präkusorpartikel in Richtung deren kristallographischen c-Achse größer sind als in einer Richtung senkrecht zu dieser Richtung.

Gemäß einer zweiten Variante des Verfahrens werden die Kristallisationskeime in einem alternativen dritten Schritt, insbesondere an deren (100)-Kristalloberflächen, an deren (010)-Kristalloberflächen und/oder an deren (110)- Kristalloberflächen, beschichtet. Solche Beschichtungsverfahren sind bereits aus dem Stand der Technik bekannt. Eine solche Beschichtung ist beispielsweise anhand einer organischen Verbindung, insbesondere Bitumen, einem Polyisopren oder einem, vorzugsweise oxidierbaren, Nanopulver, gebildet bzw. hergestellt. Alternativ oder zusätzlich hierzu können anorganische Verbindungen wie AL₂O₃, ZrO₂, ZnO, SrCrO₄ verwendet werden.

In Analogie zum vierten Schritt der ersten Variante wird in einem vierten Schritt gemäß der zweiten Variante die Fällungsreaktion fortgesetzt bzw. eine weitere Fällungsreaktion eingeleitet. Folglich ist ein Wachstum in Richtung der kristallographischen c-Achse aufgrund der Beschichtung, insbesondere an den (100)-Kristalloberflächen, an den (010)-Kristalloberflächen und/oder an den (110)- Kristalloberflächen, vergleichsweise groß.

Gemäß einer alternativen dritten Variante des Verfahrens werden die Kristallisationskeime im dritten Schritt uniaxial komprimiert. Die Kristallisationskeime sind aufgrund deren Kristallstruktur anisotrop. Insbesondere weisen diese eine vergleichsweise geringe Steifheit, also eine vergleichsweise große Verformbarkeit, in Richtung deren kristallographischer c-Achse auf. Aufgrund dessen und ggf. sofern die Kristallisationskeime in deren ab-Kristallebene eine vergleichsweise große Ausdehnung aufweisen, richten sich die Kristallisationskeime unter der für die Komprimierung genutzten Druckeinwirkung bevorzugt derart aus, dass deren kristallographische c-Achse in Richtung der uniaxialen Druckeinwirkung/ Komprimierung orientiert ist. Beispielsweise sind die Kristallisationskeime dabei in der oder in einer Lösung verwendet. Alternativ hierzu werden die Kristallisationskeime vor der Komprimierung aus der Lösung entnommen und zweckmäßigerweise gewaschen und getrocknet.

In einem vierten Schritt gemäß der dritten Variante werden die ausgerichteten Kristallisationskeime gesintert. Insbesondere erfolgt der Sintervorgang für eine Zeitdauer zwischen 8 und 12 Stunden, insbesondere für eine Zeitdauer von 10 Stunden, und mit einer Temperatur zwischen 700°C und 1200°C, vorzugsweise mit einer Temperatur von 1000°C. Beispielsweise wird die uniaxiale Komprimierung beim Sinterprozess wiederholt durchgeführt.

Aufgrund der Ausrichtung der Kristallisationskeime erfolgt beim des Sinterns ein Verbinden der Kristallisationskeime an deren (001)-Kristalloberflächen, bevorzugt. Folglich werden mittels dieser Verbindung Präkursorpartikel gebildet, deren Ausdehnung in Richtung deren kristallographischer c-Achse, also senkrecht zu der (001)-Kristalloberfläche im Vergleich zur den Kristallisationskeimen, vergleichsweise groß ist zu deren Ausdehnung in einer Richtung senkrecht hierzu. Sofern notwendig kann der dritte und/oder vierte Schritt wiederholt werden.

In einem fünften Schritt, welcher der ersten, der zweiten und der dritten Variante des Verfahrens gemeinsam ist, werden die Präkursorpartikel kalziniert und zweckmäßigerweise anschließend gesintert. Die hierbei entstandenen Sekundärpartikel können anschließend zweckmäßigerweise durch Mahlen auf eine vorgegebene Größe bzw. auf einen vorgegebenen Größenbereich verkleinert werden.

Nachfolgend werden Ausführungsbeispiele der Erfindung anhand einer Zeichnung näher erläutert. Darin zeigen:
- Fig.1: eine schematische Darstellung der Kristallstruktur eins einer Lithium-Übergangsmetalloxid-Verbindung, bei welcher Übergangsmetalloxid-Schichten und Lithium-Schichten alternieren, wobei die kristallographische c-Achse senkrecht zu diesen Schichten orientiert ist,
- Fig.2: schematisch und ausschnittsweise eine Schnittdarstellung eines Sekundärpartikel mit einer Vielzahl an Primärpartikeln, wobei die Primärpartikel entlang deren kristallographischen c-Achse elongiert sind, und
- Fig. 3: ein Flussdiagramm, welches ein Verfahren zur Herstellung des Sekundärpartikels repräsentiert.

Einander entsprechende Teile und Größen sind in allen Figuren stets mit gleichen Bezugszeichen versehen.

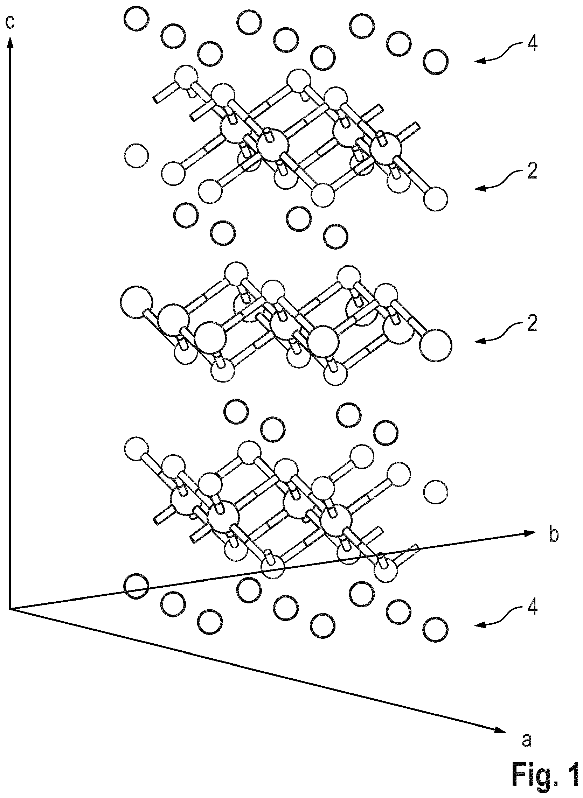

In der Fig. 1 ist eine Kristallstruktur eines Lithium-Übergangsmetalloxids dargestellt. Dieses eine Schichtstruktur auf, welche aus alternierend übereinander angeordneten Schichten aus einem Übergangsmetalloxid, im Folgenden als Übergangsmetallschichten 2 bezeichnet, und Schichten aus Lithium-Ionen, im Folgenden als Lithium-Schichten 4 bezeichnet, gebildet ist. Mit anderen Worten sind die Lithiumschichten 4 und die Übergangsmetalloxidschichten abwechselnd übereinander angeordnet.

Weiterhin ist in der Fig.1 Die Orientierung der kristallographischen a-Achse, der der kristallographischen b-Achse und der kristallographischen c-Achse dargestellt. Diese Achsen sind dabei mit dem Bezugszeichen a, b bzw. c versehen. Hierbei ist die kristallographische c-Achse senkrecht zu den Schichten 2 und 4 orientiert. Die Ebenen, welche anhand der Übergangsmetallschichten 2 und der Lithiumschichten 4 aufgespannt sind, verlaufen dabei parallel zueinander. Mit anderen Worten ist die kristallographische c-Achse normal zur einer anhand einer der Übergangsmetalloxid-Schichten 2 oder einer der Lithiumschichten 4. Die Übergangsmetalloxid-Schichten 2 sind jeweils in einer mittels der kristallographischen a-Achse und der kristallographischen b-Achse der Einheitszelle aufgespannten Ebene angeordnet.

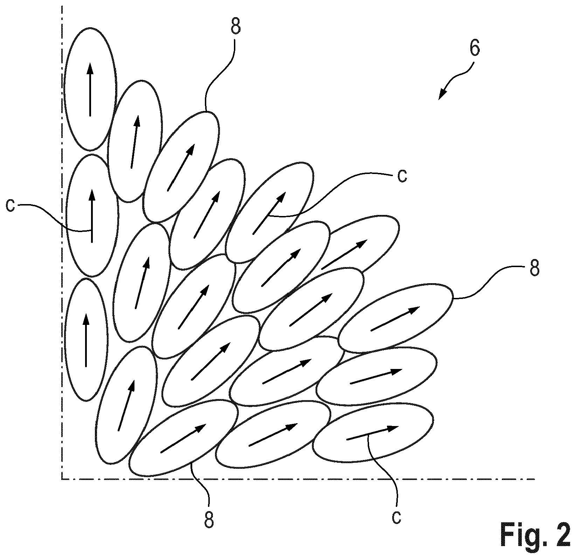

In der Fig. 2 ist ausschnittsweise ein im Wesentlichen sphärischer Sekundärpartikel 6 dargestellt, welcher aus einer Vielzahl an agglomerierten Primärpartikeln 8 eines Lithium-Übergangsmetalloxids gebildet ist. Diese Primärpartikel weisen dabei eine Kristallstruktur gemäß der Fig. 1 auf. Bei jedem der Primärpartikel 8 ist dabei die Richtung dessen kristallographischer c-Achse mit einem Pfeil repräsentiert. Die Primärpartikel 8 sind dabei in Richtung deren kristallographischer c-Achse elongiert. Mit anderen Worten weisen diese eine Ausdehnung in Richtung dessen kristallographischer c-Achse c, die größer ist als in einer Richtung senkrecht zu dieser Achse. Dabei entspricht die die kristallographische c-Achse der Haupterstreckungsrichtung, also der längsten Halbachse, des jeweiligen Primärpartikels.

Die Primärpartikel 8 weisen jeweils eine Ausdehnung zwischen 100 nm und 3 µm in Richtung deren Kristallographischer c-Achse auf. Dabei beträgt jeweils die räumliche Ausdehnung in Richtung der kristallographischer c-Achse mehr als das das 1,2-Fache der Ausdehnung des Primärpartikels 8 in einer Richtung senkrecht zu dieser Achse. Vorzugsweise weisen diese ein Aspektverhältnis zwischen 1:1,2 und 1:5 (Ausdehnung senkrecht zur c-Achse: Ausdehnung in Richtung c-Achse) auf.

Wie in der Fig. 2 weiterhin erkennbar ist, sind die Primärpartikel 8 morphologisch radial ausgerichtet. Mit andern Worten sind Primärpartikel derart ausgereichtet, dass deren Haupterstreckungsrichtung bzw. deren kristallographische c-Achse von einem Kern Sekundärpartikels 6 zu einem äußeren Rand des Sekundärpartikels 6 hin orientiert ist.

Gemäß einer nicht weiter dargestellten Variante des Sekundärpartikels sind dessen Primärpartikel 8 nicht als ein Ellipsoid ausgebildet, sondern weisen eine prismatische oder zylindrische Form auf. Die Haupterstreckungsrichtung ist dabei die Höhenrichtung des Prismas/ Zylinders.

Die in der Fig. 2 dargestellten Primärpartikel 8 sind die Größen und der Aspektverhältnisse der Primärpartikel vergleichsweise homogen. Gemäß einer nicht weiter dargestellten Variante umfasst der Sekundärpartikel, sind die Größen und/oder Aspektverhältnisse der Primärpartikel jedoch gleichmäßiger über einen Bereich von 50 nm und 5 µm für die Größe und zwischen 1:1,2 und 1:5 für das Aspektverhältnis verteilt.

Gemäß einer nicht weiter dargestellten Variante des Sekundärpartikels 6 sind dessen Primärpartikel 8 nicht radial sonders in Umfangsrichtung des Sekundärpartikels 6 oder zufällig ausgerichtet (orientiert).

Derartige Sekundärpartikel werden insbesondere für eine Kathode einer sekundären Lithium-Batteriezelle verwendet.

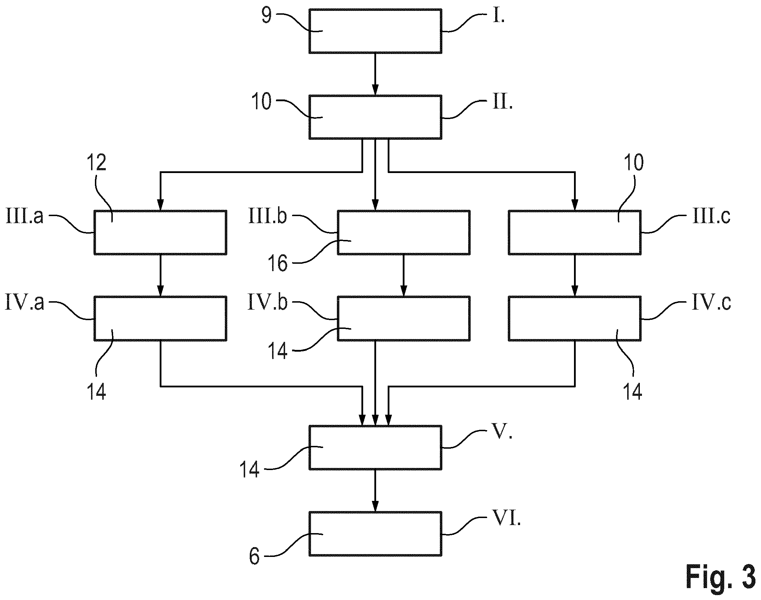

In der Fig. 3 ist ein Flussdiagramm dargestellt, das ein Verfahren zur Herstellung eines solchen Sekundärpartikels 6, insbesondere einer Vielzahl an solchen Sekundärpartikeln 6, repräsentiert.

Zunächst wird in einem ersten Schritt I. eine wässrige Lösung 9 eines Übergangsmetallsalzes hergestellt oder bereitgestellt. Zur Herstellung wird beispielsweise ein oder mehrere Übergangsmetallsulfate, insbesondere NiSO₄·6H₂O, MnSO₄·H₂O bzw. CoSO₄·7H₂O, in eine wässrigen Lösung aus Ethylenglycol und entmineralisiertem Wasser gegeben.

In einem darauf folgenden zweiten Schritt II. werden für die Bildung von Kristallisationskeimen 10 mit einem Durchmesser kleiner als 200 nm, vorzugsweise zwischen 50 und 150 nm , besonders bevorzugt zwischen 75 und 125 nm eine (erste) Fällungsreaktion durch Zugabe von einer Base, beispielsweise NaOH oder NH₄OH durchgeführt. Dabei wird vorzugsweise der pH-Wert zwischen 8 und 13, vorzugsweise auf 11 eingestellt und zweckmäßigerweise konstant gehalten. Eine Rührgeschwindigkeit beträgt dabei zwischen 500 und 200 Umdrehungen pro Minute bei einem Umgebungsdruck zwischen 1 und 5 atm (Atmosphärendruck), bevorzugt bei 1 atm. Je nach verwendetem Übergangssalz und je nach verwendeter Stöchiometrie wird die Temperatur der Lösung zweckmäßig zwischen 20°C und 95°C eingestellt. Beispielsweise wird die Temperatur für die Herstellung von NMC111 auf 80°C und für die Herstellung von NMC811 auf 40°C eingestellt.

Sofern die Kristallisationskeime eine vorgegebene Zielgröße (vorzugsweise zwischen 50 und 150 nm , besonders bevorzugt zwischen 75 und 125 nm) aufweisen, wird die Fällungsreaktion unterbrochen. Hierzu wird der pH-Wert reduziert.

Gemäß einer ersten Variante des Verfahrens werden in einem dritten Schritt III.a die aus der der Fällungsreaktion resultierenden Kristallisationskeime 10 an deren (100)-, (010)- und/oder an den (110)-Kristalloberflächen mit einwertigen Kationen 12 dotiert. Vorzugsweise erfolgt das Dotieren in der wässrigen Lösung 9. Sofern das Dotierungsverfahren es allerdings erfordert, werden die Kristallisationskeime 10 zweckmäßigerweise vor dem Dotieren aus der wässrigen Lösung 9 entnommen, und vorzugsweise gereinigt und getrocknet. Des Weiteren werden hierfür Wasserstoffkationen (H⁺), Natriumkationen (Na⁺), Kaliumkationen (K⁺) oder Ammoniumionen (NH₄⁺) verwendet. Aufgrund eines Überschusses dieser Ionen und/oder aufgrund der exponierten Lage des Sauerstoffs der Kristallkeime werden bevorzugt die (100)-Kristalloberflächen, die (010)-Kristalloberflächen bzw. die (110)- Kristalloberflächen dotiert.

Hierzu wird ein Überschuss dieser Kationen 12, zweckmäßigerweise in Form eines Salzes, zur wässrigen Lösung, die die Kristallisationskeime enthält, hinzugegeben.

Anschließend wird in einem vierten Schritt IV.a die Fällungsreaktion durch Zugabe einer Base, also durch Erhöhung des pH-Wertes auf einen Bereich zwischen 8 und 13, fortgesetzt bzw. eine weitere (zweite) Fällungsreaktion eingeleitet. Folglich wachsen die Kristallisationskeime aus der Übergangsmetallverbindung unter Bildung von Präkursorpartikeln 14 weiter. Da die Dotierung jedoch die Oberflächenenergie an den (100)-Kristalloberflächen, an den (010)-Kristalloberflächen und/oder an den (110)- Kristalloberflächen reduziert ist, ist ein Wachstum des jeweiligen Kristalls in Richtung deren kristallographischen c-Achse größer als in einer Richtung senkrecht zu dieser Richtung.

Gemäß einer alternativen zweiten Variante des Verfahrens werden die Kristallisationskeime 10 in einem dritten Schritt III.b an deren (100)-Kristalloberflächen, an deren (010)-Kristalloberflächen und/oder an deren (110)- Kristalloberflächen beschichtet. Vorzugsweise erfolgt das Beschichten in der wässrigen Lösung 9. Sofern das Beschichtungsverfahren es allerdings erfordert, werden die Kristallisationskeime 10 zweckmäßigerweise vor dem Beschichten aus der wässrigen Lösung 9 entnommen, und vorzugsweise gereinigt und getrocknet. Für eine solche Beschichtung 16 kann eine organischen Verbindung, beispielsweise Bitumen, oder einem Polyisopren verwendet werden. Alternativ hierzu wird ein, vorzugsweise oxidierbares, Nanopulver verwendet, welches insbesondere Durchmesser aufweist, welcher 1/10 bis 1/3 der Fläche der (100)-Kristalloberfläche, der (010)-Kristalloberflächen und/oder der (110)- Kristalloberfläche aufweist. Weiter alternativ können anorganische Verbindungen wie AL₂O₃, ZrO₂ verwendet werden. Weitere Beispiele für eine geeignete anorganische Verbindung sind ZnO oder SrCrO₄, wobei für einen Überschuss an Zn bzw. an Cr 0,05 bis 0,2, vorzugsweise 0,1 mol pro mol Übergangsmetallsalz verwendet wird. Aufgrund des Überschusses und/oder aufgrund der exponierten Lage des Sauerstoffs der Kristallkeime werden bevorzugt die (100)-Kristalloberflächen, die (010)-Kristalloberflächen bzw. die (110)- Kristalloberflächen dotiert.

Der vierte Schritt IV.b gemäß der zweiten Variante des Verfahrens erfolgt analog zum vierten Schritt IV.a gemäß der ersten Variante. Aufgrund der Beschichtung ist ebenfalls die Oberflächenenergie der (100)-Kristalloberflächen, der (010)-Kristalloberflächen und/oder der (110)-Kristalloberflächen reduziert, so dass bei der zweiten Fällungsreaktion bzw. bei der Fortsetzung der ersten Fällungsreaktion ein vergleichsweise schnelles Kristallwachstum entlang der kristallographischen c-Achse des jeweiligen Kristallkeims 10 realisiert ist.

Gemäß einer alternativen dritten Variante des Verfahrens werden die Kristallisationskeime 10 in einem dritten Schritt III.c uniaxial komprimiert. Zweckmäßigerweise werden die Kristallisationskeime 10 hierzu zunächst aus der wässrigen Lösung entnommen, vorzugsweise gereinigt und getrocknet. Anschließend werden die Kristallisationskeime 10 mit einem uniaxial, also entlang einer einzigen Richtung wirkenden, Druck beaufschlagt.

Aufgrund deren Anisotropie richten sich die Kristallisationskeime 10 unter der für die Komprimierung genutzten Druckeinwirkung bevorzugt derart aus, dass deren kristallographische c-Achse in Richtung der uniaxialen Druckeinwirkung/ Komprimierung orientiert ist.

In einem vierten Schritt IV.c gemäß der dritten Variante werden die ausgerichteten Kristallisationskeime gesintert. Der Sintervorgang erfolgt dabei für eine Zeitdauer zwischen 8 und 12 Stunden, insbesondere für eine Zeitdauer von 10 Stunden, und mit einer Temperatur zwischen 700°C und 1200°C, vorzugsweise mit einer Temperatur von 1000°C. Die uniaxiale Komprimierung wird bei der Durchführung des Sinterprozesses wiederholt durchgeführt.

Aufgrund der Ausrichtung der Kristallisationskeime erfolgt beim des Sinterns ein Verbinden der Kristallisationskeime an deren (001)-Kristalloberflächen, bevorzugt. Folglich werden mittels dieser Verbindung Präkursorpartikel 14 gebildet, deren Ausdehnung in Richtung deren kristallographischer c-Achse, also senkrecht zu der (001)-Kristalloberfläche im Vergleich zur den Kristallisationskeimen, vergleichsweise groß ist zu deren Ausdehnung in einer Richtung senkrecht hierzu. Sofern notwendig kann der dritte und/oder vierte Schritt wiederholt werden.

In der Figur 3 ist der dritte und der vierte Schritt für die erste Variante des Verfahrens mit dem Bezugszeichen III.a bzw. IV.a, für die zweite Variante des Verfahren mit dem Bezugszeichen III.b bzw. IV.b und für die dritte Variante des Verfahren mit dem Bezugszeichen III.c bzw. IV.c versehen.

Geeigneter Weise werden die Präkursorpartikel 14 zunächst gewaschen, gefiltert und, beispielsweise bei einer Temperatur zwischen 100°C und 110°C, getrocknet. Anschließen wird in einem fünften Schritt V. die Präkursorpartikel 14 kalziniert. Hierzu werden die Präkursorpartikel 14 zunächst mit einem Lithiumsalz, insbesondere Li₂CO₃ oder LiOH gemischt. Geeigneter Weise erfolgt das Mischen bei Standardbedingungen (25°C Umgebungstemperatur und 1013 mbar Umgebungsdruck) und in einem stöchiometrischen Verhältnis Li (aus dem Lithiumsalz) zu Übergangsmetalloxid von beispielsweise 1,05:1 bis 1,20:1, vorzugsweise in einem stöchiometrischen Verhältnis von 1,10:1. Somit ist also ein Lithium-Überschuss realisiert. Das darauf folgende Kalzinieren erfolgt insbesondere bei einer Temperatur zwischen 350°C und 600°C, bevorzugt bei 450°C für eine Stunde. Vorzugsweise erfolgt dies unter Verwendung einer Sauerstoffatmosphäre.

Zeitlich darauf folgend erfolgt ein Sintervorgang der kalzinierten Präkursorpartikel (sechster Schritt VI.). Der Sintervorgang erfolgt bei einer Temperatur zwischen 700°C und 1000°C, vorzugsweise bei 800°C für eine Zeitdauer von 10 Stunden.

Aufgrund des Kalzinierens und/oder des Sinterns werden ggf. die Doping-Elemente/Verbindungen entfernt bzw. die Beschichtung, insbesondere sofern diese auf einer organischen Verbindung basiert, verbrannt oder zu Kohlenstoff zersetzt. Aufgrund dieser Zersetzung der Beschichtung können vorteilhaft auch elektrisch nicht leitfähige Beschichtungen für den Herstellungsprozess verwendet werden.

Die beim Sintern erzeugten Sekundärpartikel können anschließend durch Mahlen, beispielsweise anhand einer Luftstrahlmühle bei einer Luftgeschwindigkeit zwischen 200 m/s und 400 m/s, auf eine vorgegebene Größe bzw. auf einen vorgegebenen Größenbereich verkleinert werden.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Übergangsmetalloxid-Schicht
- 4: Lithium-Schicht
- 6: Sekundärpartikel
- 8: Primärpartikel
- 9: wässrige Lösung
- 10: Kristallisationskeim
- 12: Kationen
- 14: Präkursorpartikel
- 16: Beschichtung

- I.: Herstellen/Bereitstellen einer wässrigen Lösung eines Übergangsmetallsalzes
- II.: Durchführen einer Fällungsreaktion
- IIIa.: Dotieren
- III.b: Beschichten
- III.c: Komprimieren
- IV.a: Durchführen einer Fällungsreaktion
- IV.b: Durchführen einer Fällungsreaktion
- IV.c: Sintern
- V.: Kalzinieren
- VI.: Sintern

- a: kristallographische a-Achse
- b: kristallographische b-Achse
- c: kristallographische c-Achse

## Patentansprüche

1. Sekundärpartikel (6) für eine Kathode einer sekundären Lithium -Batteriezelle, aufweisend
- eine Vielzahl an Primärpartikeln (8), wobei jeder der Primärpartikel eine schichtartige kristalline Struktur aufweist, bei der Übergangsmetalloxid-Schichten (2) und Lithium-Schichten (4) alternieren,
**dadurch gekennzeichnet,**
**dass** jeder der Primärpartikel (8) eine Ausdehnung in Richtung dessen kristallographischer c-Achse (c) aufweist, die größer ist als in einer Richtung senkrecht zu dieser Achse.

2. Sekundärpartikel (6) nach Anspruch 1,
**dadurch gekennzeichnet,**
**dass** die räumliche Ausdehnung der Primärpartikel (8) in Richtung dessen kristallographischer c-Achse (c) jeweils mindestens das 1,2-Fache, insbesondere mindestens das Doppelte, der Ausdehnung des Primärpartikels (8) in einer Richtung senkrecht zu dieser Achse ist.

3. Sekundärpartikel (6) nach Anspruch 1 oder 2,
**dadurch gekennzeichnet,**
**dass** die kristallographische c-Achse (c) parallel zur Haupterstreckungsrichtung des jeweiligen Primärpartikels (8) ist.

4. Sekundärpartikel (6) nach einem der Ansprüche 1 bis 3,
**dadurch gekennzeichnet,**
**dass** die Primärpartikel (8), insbesondere in ein einem Schalenbereich, morphologisch radial ausgerichtet sind.

5. Sekundärpartikel (6) nach einem der Ansprüche 1 bis 4,
**dadurch gekennzeichnet,**
**dass** die Primärpartikel (8) jeweils eine Ausdehnung zwischen 50 nm und 5 µm aufweisen.

6. Kathode für eine sekundäre Lithium -Batteriezelle, aufweisend einen Sekundärpartikel (6), welcher nach einem der Ansprüche 1 bis 5 ausgebildet sind

7. Sekundäre Lithium -Batteriezelle mit einer Kathode nach Anspruch 6.

8. Verfahren zur Herstellung eines Sekundärpartikels (6) nach einem der Ansprüche 1 bis 5,
- bei dem eine wässrige Lösung (9) eines Übergangsmetallsalzes bereitgestellt wird,
- bei dem zur Bildung von Kristallisationskeimen (10) aus einer Übergangsmetallverbindung eine Fällungsreaktion durch Zugabe einer Base in die wässrige Lösung (9) durchgeführt wird,
- bei dem die aus der Fällungsreaktion resultierenden Kristallisationskeime (10) mit einwertigen Kationen (12) dotiert werden,
- bei dem unter Bildung von Präkursorpartikeln (14) aus den dotierten Kristallisationskeimen (10) eine weitere Fällungsreaktion durchgeführt wird, und
- bei dem die Präkursorpartikel (14) kalziniert werden.

9. Verfahren zur Herstellung eines Sekundärpartikels (6) nach einem der Ansprüche 1 bis 5,
- bei dem eine wässrige Lösung (9) eines Übergangsmetallsalzes bereitgestellt wird,
- bei dem zur Bildung von Kristallisationskeimen (10) aus einer Übergangsmetallverbindung eine Fällungsreaktion durch Zugabe einer Base in die wässrige Lösung (9) durchgeführt wird,
- bei dem die aus der Fällungsreaktion resultierenden Kristallisationskeime (10) beschichtet werden,
- bei dem unter Bildung von Präkursorpartikeln (14) aus den beschichteten Kristallisationskeimen (10) eine weitere Fällungsreaktion durchgeführt wird, und
- bei dem die Präkursorpartikel (14) kalziniert werden.

10. Verfahren zur Herstellung eines Sekundärpartikels (6) nach einem der Ansprüche 1 bis 5,
- bei dem eine wässrige Lösung (9) eines Übergangsmetallsalzes bereitgestellt wird,
- bei dem zur Bildung von Kristallisationskeimen (10) aus einer Übergangsmetallverbindung eine Fällungsreaktion durch Zugabe einer Base in die wässrige Lösung (9) durchgeführt wird,
- bei dem unter Bildung von Präkursorpartikeln (14) die aus der Fällungsreaktion resultierenden Kristallisationskeime (10) durch uniaxiale Komprimierung zueinander ausgerichtet und gesintert werden,
- bei dem die Präkursorpartikel (14) kalziniert werden.
